# EUROPEAN PATENT SPECIFICATION

(11) **EP 0 709 022 B1**
(45) Date of publication and mention of the grant of the patent: **22.08.2001**
(21) Application number: 95830431.3
(22) Date of filing: 13.10.1995
(51) Int. Cl.: A01K 5/00

(54) **Fodder mixer-mincer truck equipped with archimedean screws**
Anhänger mit Schnecken zum Mischen, Zerkleinen und Verteilen von Tierfutter
Benne équipée de vis d'Archimèdes pour mélanger et distribuer du fourage

(30) Priority: 25.10.1994 IT VR950089
(43) Date of publication of application: 01.05.1996
(73) Proprietor: STORTI INTERNATIONAL S.r.l., I-37050 Belfiore d'Adige (Verona) (IT)
(72) Inventor: Storti, Ottorino, I-37050 Belfiore d'Adige (Verona) (IT)
(74) Representative: Sarpi, Maurizio

(56) References cited:
- FR-A- 2 335 370
- FR-A- 2 632 827
- US-A- 4 432 499

## Description

The present industrial invention refers to a fodder mixer-mincer truck the peculiarity of which is the presence of more Archimedean screws or augers which are arranged according to both horizontal and vertical axes and co-operate one another.

At present mixer trucks for mincing fodder are known. Such trucks consist in general of a body which may be either self-moving or hauled. Within the truck there are shafts which support Archimedean screws which mix and mince the forage which is fed in various forms such as bales and according to various feeding systems.

Such trucks may be provided with a milling arm for the self-loading by drawing the ensiled fodder and comprise in general an ejecting device which permits the minced material to be conveyed towards the place of utilization.

The known mixer trucks may be subdivided in two categories according to the arrangement of the inner Archimedean screws, i.e. trucks with horizontal Archimedean screws and truck with vertical Archimedean screws.

The advantages of the truck equipped with horizontal Archimedean screws are several and refer above all to a simple loading of the fodder which may be let in from both the upper side and the rear side of the truck, a high capability in mincing the material in a short time and a limited road encumbrance in breadth and height thanks to the typical oblong shape of the truck. However, the trucks equipped with horizontal Archimedean screws may give rise to difficulties in relation to the inner revolution or mixing of the fodder. As a consequence of this, such Archimedean screws may be damaged owing to an overloading.

On the contrary, the mixer trucks equipped with vertical Archimedean screws or augers are effective as concerns the mixing of forage but they are not effective as concerns the mincing of forage. Moreover, such mixer trucks equipped with vertical Archimedean screws are often very cumbersome since their typical form like a downward frustum of cone may show a very large diameter in order to obtain the same cubage as the horizontal trucks. As a consequence of this, such vertical trucks are too wide.

In addition, the wheels of a vertical truck have not to project from the truck laterally otherwise the already considerable width of the truck would become even wider. In consequence of this, it is necessary to mount the wheels under the truck, which involves a rise of the height.

Thus it appears very difficult owing to the foregoing reasons to carry out a truck with a vertical Archimedean screw not exceeding the present road limit gauge.

US-A-4,432,499 discloses a vehicle carrying a fodder grinder-mixer which is provided with mechanisms and a series of horizontal and vertical augers. However, these augers accomplish tasks which are conceptually different from those of the present invention.

In fact, a machine as described in US-A-4,432,499 only mixes ground feed. The machine accomplishes a preliminary feed grinding by means of a hammermill which grinds the feed in the wished consistency.

The aim of the present invention consists in overcoming the inconveniences of both categories of mixer trucks and combining the merits of both categories, and precisely in conceiving and carrying out a truck comprising Archimedean screws or augers the particular arrangement of which permits the contained fodder to be mixed continuously and regularly and minced perfecly in a short time.

An immediate advantage of the present invention is the fact that the dimensions of the truck in question do not exceed the present limit gauges notwithstanding such a truck has a larger cubage capacity than the present solutions.

Another advantage is the possibility of loading the truck with forage from both the upper side, for instance in bales, and the rear side by means of a milling arm which mills the ensiled fodder.

The foregoing particular aims, advantages and functions are all reached according to the present invention by a fodder mixer-mincer truck which is equipped with horizontal and vertical Archimedean screws or augers co-operating one with another, which truck comprises a containing body which has an oblong shape and is supported by side wheels, the body comprising one or more Archimedean screws or augers which are arranged on shafts which have substantially horizontal axes, such horizontal Archimedean screws being arranged in the rear part of the truck body, and at least one Archimedean screw or auger which is arranged on a shaft which has a substantially vertical axis, such a vertical Archimedean screw being arranged in the fore part of the truck body; such Archimedean screws are arranged in such a way that an end of each screw projects from the corresponding operative sector of the truck body while the other end is free to permit a continuous mixing and mincing of fodder; the Archimedean screws or augers may be provided with additional mincing blades or cutters.

Further features and details of the present invention will be made clearer from the following description which describes a preferential embodiment of the invention which is represented as an example which does not limit the invention itself as well as from the accompanying drawing wherein:

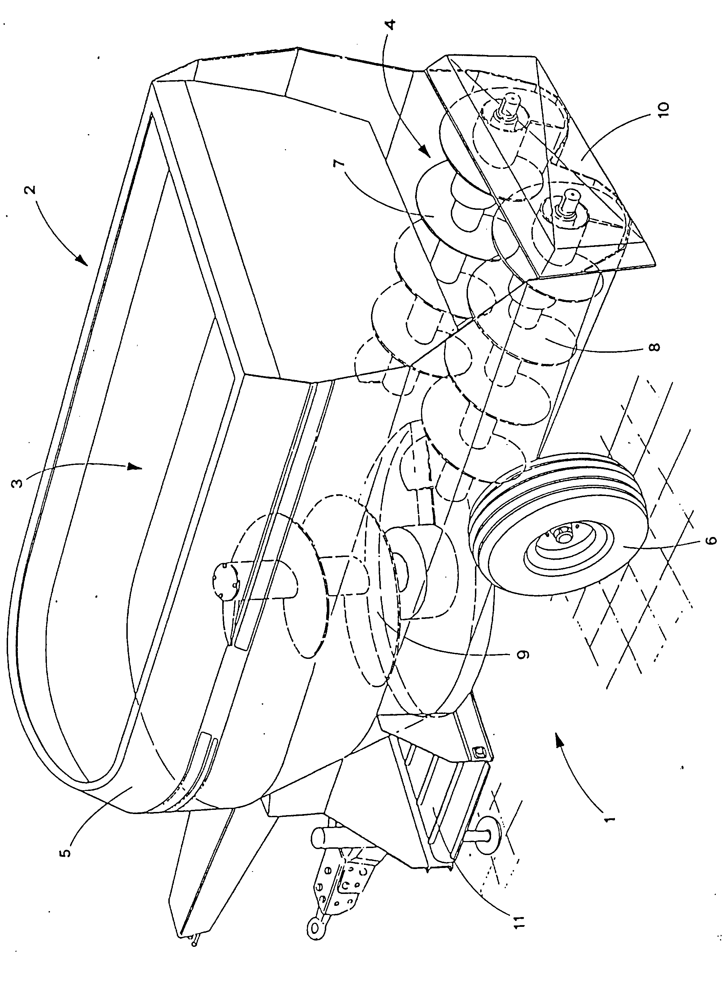

Figure 1 shows a schematic perspective view of the truck on the whole.

With reference to the accompanying drawing, number 1 denotes a fodder mixer-mincer truck on the whole. Such a truck comprises an oblong body 2 showing an opening 3 at the upper side, a second opening 4 at the rear side, a round sector 5 in the fore part. The truck is supported by wheels 6 which are arranged in the lower middle part of the truck body and outside the body.

More Archimedean screws or augers are arranged within the truck 1 in a particular disposition, their axes being substantially orthogonal one another.

More precisely, the truck is provided with Archimedean screws or augers 7 and 8 which show horizontal axes and are arranged in the rear part of the truck, and an Archimedean screw or auger 9 which shows a vertical axis and is arranged in the fore part of the truck.

The horizontal Archimedean screws 7 and 8 project from the inner side of the bottom wall 10 of the truck so that the other ends of the screws are free and permit a continuous advancing of the fodder which can be mixed and minced also in the sector in which the vertical Archimedean screw acts.

The Archimedean screw 9 has a substantially conical shape and projects from the inner lower part of the body of the truck in such a way that the upper end of the Archimedean screw is free and permits a further continuous advancing and mincing of fodder.

Both the vertical Archimedean screw 9 and the two horizontal Archimedean screws 7 and 8 are set in action by a common operating system which takes motion from a fore power take-off of the truck and by suitable gears of reduction or variation or the like which are not represented since such means are known.

Further, such Archimedean screws or augers rotate simultaneouly so that the horizontal screws convey the fodder towards the vertical screw which pushes the fodder upwards.

As it can be seen in the accompanying drawing, the particular horizontal and vertical arrangement of the augers permits the loaded forage to to continuously conveyed so that the forage accomplishes a continuous revolution within the truck, that is from the sector of the horizontal augers to the sector of the vertical auger, from here to the top of the truck and finally, from the top to the initial position and so on.

It is evident that such a combination permits to obtain a very effective action of mixing and mincing for the forage since the so-mixed forage maintains its own organic characteristics.

In fact, the forage is not squashed, nor is it treated in a violent manner, nor is it overheated during the work cycle. Moreover, the forage is minced perfectly and homogeneously. In such a way optimum results are obtained as concerns the nourishing of the cattle to which the forage in question is in general designed.

As mentioned above, although the present truck has a considerable cubage, its dimensions do not exceed the road limit gauges. In addition, it is possible to load such a truck from both the upper side through the opening 3 and the rear side through the opening 4. In the first case, the fodder is fed in form of bales or the like. In the second case, a milling arm draws the ensiled forage directly.

As an advantage, the above-described Archimedean screws or augers may be provided with additional blades or cutters which are arranged along the edges of the Archimedean screws for facilitating the mincin action of the screws.

The so-obtained fodder is expelled by a conventional expelling device which permits the fodder to reach the place of destination and utilization.

The present fodder mixer-mincer truck has been described and represented according to a preferential solution, however some variants may be provided which are equivalent technically to the described mechanical parts and components and are to be considered as comprised in the range of protection of the present invention.

## Claims

1. A fodder mixer-mincer truck, provided with spiral and/or sectors Archimedean screws or augers, arranged horizontally and vertically and co-operating with one another, such a truck comprising a containing oblong body (2), supported by side wheels (6) and one or more Archimedean screws or augers (7, 8), arranged on essentially horizontal shafts in the rear part of the truck body and at least one Archimedean screw or auger (9), arranged on an essentially vertical shaft in the fore part of the truck body, characterized in that the said Archimedean screws or augers are mounted as cantilever parts in the respective operative sector of the truck body and each auger has a free end.

2. A fodder mixer-mincer truck as claimed in claim 1, characterized in that at least the vertical auger shows a conical shape while the lower augers are parallel and act in combination with one another and that all the horizontal and vertical augers permit a mincing of fodder.

3. A fodder mixer-mincer truck as claimed in the foregoing claims, characterized in that all the augers are provided with additional cutters, which are arranged along the helical outer edges of the augers.

4. A fodder mixer-mincer truck as claimed in the foregoing claim, characterized in that both the vertical Archimedean screw (9) and the horizontal Archimedean screws (7, 8) may be set in action by a common operating system which takes motion from a fore power take-off of the truck and by suitable gears of reduction or variation or the like.

## Patentansprüche

1. Futter-Mischwolf-Wagen, versehen mit zusammenwirkenden horizontal und vertikal angeordneten archimedischen Spiral- und/oder Sektor-Schrauben oder Schneckenwellen, wobei der Wagen einen länglichen bzw. rechteckförmigen Behälter (2) mit seitlich angeordneten Rädern (6) und eine oder mehrere auf annähernd horizontalen Wellen angeordnete archimedische Schrauben oder Schneckenwellen (7, 8) im hinteren Teil des Wagenbehälters und mindestens eine auf einer annähernd vertikalen Welle angeordnete archimedische Schraube oder Schneckenwelle (9) im vorderen Teil des Wagenbehälters aufweist, dadurch gekennzeichnet, dass die archimedischen Schrauben oder Schneckenwellen als freitragende Teile in dem jeweiligen Betriebssektor des Wagenbehälters angeordnet sind und jede Schneckenwelle ein freies Ende hat.

2. Futter-Mischwolf-Wagen nach Anspruch 1, dadurch gekennzeichnet, dass zumindest die vertikale Schneckenwelle eine konische Form aufweist, während die unteren Schneckenwellen parallel angeordnet sind und in Kombination miteinander arbeiten, und dass alle horizontalen und vertikalen Scheckenwellen ein Zerhacken des Futters ermöglichen.

3. Futter-Mischwolf-Wagen nach den vorhergehenden Ansprüchen, dadurch gekennzeichnet, dass alle Schneckenwellen mit zusätzlichen Schneidvorrichtungen, die entlang der schraubenförmigen äußeren Kanten der Schneckenwellen angeordnet sind, versehen sind.

4. Futter-Mischwolf-Wagen nach dem vorhergehenden Anspruch, dadurch gekennzeichnet, dass sowohl die vertikale archimedische Schraube (9) als auch die horizontalen archimedischen Schrauben (7, 8) durch ein gemeinsames Betriebsystem in Bewegung gesetzt werden können, welches von einem vorderen Leistungsabtrieb über geeignete Untersetzungs- oder -Änderungsgetriebe oder dergleichen angetrieben wird.

## Revendications

1. Benne pour mélanger et distribuer du fourrage, équipée de vis d'Archimède à secteurs et/ou à hélices ou vrilles, disposées horizontalement et verticalement et coopérant l'une avec l'autre, une telle benne comprenant un corps oblong réceptacle (2), supporté par des roues latérales (6) et une ou plusieurs vis d'Archimède ou vrilles (7, 8), disposées sur des arbres principalement horizontaux dans la partie arrière du corps de la benne et au moins une vis d'Archimède ou vrille (9), disposée sur un arbre principalement vertical dans la partie avant du corps de la benne, caractérisée en ce que lesdites vis d'Archimède ou vrilles sont montées comme des pièces en porte à faux dans le secteur opérationnel respectif du corps de la benne et en ce que chaque vrille dispose d'une extrémité libre.

2. Benne pour mélanger et distribuer du fourrage selon la revendication 1, caractérisée en ce qu'au moins la vrille verticale montre une forme conique alors que les vrilles inférieures sont parallèles et agissent en association l'une avec l'autre et en ce que toutes les vrilles horizontales et verticales permettent de distribuer le fourrage.

3. Benne pour mélanger et distribuer du fourrage selon les précédentes revendications, caractérisée en ce que toutes les vrilles disposent de lames supplémentaires, qui sont disposées le long des bords extérieurs hélicoïdaux des vrilles.

4. Benne pour mélanger et distribuer du fourrage selon la précédente revendication, caractérisée en ce qu'à la fois la vis d'Archimède verticale (9) eL les vis d'Archimède horizontales (7, 8) peuvent être mises en service par un système de fonctionnement commun qui prend le mouvement à partir d'une prise de force avant de la benne et par des engrenages de réduction ou de variation appropriés ou similaire.
